# EUROPÄISCHE PATENTSCHRIFT

(11) **EP 1 270 326 B1**
(45) Veröffentlichungstag und Bekanntmachung des Hinweises auf die Patenterteilung: **30.07.2008**
(21) Anmeldenummer: 02012600.9
(22) Anmeldetag: 06.06.2002
(51) Int. Cl.: B60Q 1/12, B60Q 1/115

(54) **Scheinwerfer für ein Kraftfahrzeug**
Headlamp for vehicle
Phare pour véhicule

(30) Priorität: 27.06.2001 DE 10131068
(43) Veröffentlichungstag der Anmeldung: 02.01.2003
(73) Patentinhaber: GM Global Technology Operations, Inc., Detroit, MI 48265-3000 (US); Hella KGaA Hueck & Co., 59552 Lippstadt (DE)
(72) Erfinder: Feid, Thomas, Dipl.-Ing., 68239 Mannheim (DE); Hesse, Burkhard, Dipl.-Ing., 59597 Erwitte (DE); Abel, Björn, 32107 Bad Salzuflen (DE)
(74) Vertreter: Daniel, Ulrich W.P.

(56) Entgegenhaltungen:
- EP-A- 0 764 559
- EP-A- 1 270 323
- EP-A1- 1 264 731
- DE-A1- 3 931 196
- DE-A1- 19 527 349
- DE-A1- 19 905 173
- US-A- 5 660 454
- US-A- 5 833 346

## Beschreibung

Die Erfindung bezieht sich auf einen Scheinwerfer für ein Kraftfahrzeug mit einem an einem Aufnahmeteil gehalterten und um eine vertikale Achse sowie eine horizontale Achse verschwenkbaren Lichtmodul und mit zwei fernbetätigten Stellern zur vertikalen Leuchtweitenregulierung sowie zur horizontalen Kurvenlichtregulierung.

Aus der DE 198 02 023 A1 ist ein Scheinwerfer bekannt, der ein topfförmiges Aufnahmeteil aufweist, dessen Vorderseite durch eine lichtdurchlässige Abschlussscheibe abgeschlossen ist. In dem von dem Aufnahmeteil und der Abschlussscheibe gebildeten Inneren des Scheinwerfers ist ein Lichtmodul angeordnet. Das Lichtmodul ist von einem Tragrahmen gehaltert, der in dem Scheinwerfergehäuse um eine horizontale Achse schwenkbar gelagert ist. Die horizontale Achse ist von zwei Halteteilen mit gelenkigen Verbindungselementen gebildet. Der Tragrahmen ist durch einen fernbetätigten ersten Steller zur vertikalen Leuchtweiteregulierung des Scheinwerfers um die horizontale Achse schwenkbar. Das Lichtmodul ist an dem Tragrahmen um eine vertikale Achse schwenkbar gelagert und durch einen am Tragrahmen befestigten fernbetätigten zweiten Steller für Kurvenlicht um diese vertikale Achse schwenkbar. Durch die Verwendung des Tragrahmens weist der Scheinwerfer eine entsprechend große Masse und Größe auf.

Die DE 195 27 349 A1 offenbart einen Scheinwerfer für ein Kraftfahrzeug, der mit einem fernbetätigten Steller zur vertikalen Leuchtweitenregulierung um eine vertikale Achse verschwenkbar ist.

Des Weiteren zeigt die DE 199 05 173 A1 einen Scheinwerfer für ein Fahrzeug mit einem Reflektor, der mittels eines Stellers um eine horizontale und mittels einer manuellen Verstelleinrichtung um eine vertikale Achse verschwenkbar ist. Der Steller ist mit einer einen Speicher aufweisenden Steuereinrichtung zur Einstellung einer Grundposition gekoppelt.

Darüber hinaus beschreibt die US-A-5 660 454 eine Vorrichtung zur Steuerung der Lichtverteilung eines Scheinwerfers mit Verstelleinrichtung anhand einer Vielzahl von Ist-Zustandswerten bzw. Sensordaten.

Ferner offenbart die EP 0 764 559 A2 ein Verfahren zur Eichung eines Systems zur Regelung der Leuchtweite von Kraftfahrzeugscheinwerfern, bei dem alle Parameter des Regelsystems auf Werte einer einer vorgegebenen Leuchtweite entsprechenden Grundeinstellung eingestellt werden. Im Weiteren ist dargestellt, dass Scheinwerfer beispielsweise mit einem Reflektor zusammenwirkende Stelleinrichtungen aufweisen. Zur Bestimmung des Grundwertes wird zwar ein Korrekturwert abgespeichert, jedoch wird nicht die Grundeinstellung selbst abgespeichert, da stets ein Lagewert durch Messungen ermittelt und mit dem Korrekturwert zur Bildung eines Sollwertes für die Grundeinstellung beaufschlagt.

Entsprechend gesetzlicher Regelungen zur Vermeidung einer Blendung des Gegenverkehrs sowie von Sichtweitenverlusten des Fahrers eines Kraftfahrzeuges verfügt jeder Scheinwerfer für ein Kraftfahrzeug über mechanische Einstellelemente, mit denen die lichtabstrahlende Einrichtung des Scheinwerfers in einer Grundeinstellung justiert wird, in der die Leuchtweite bzw. Lichtverteilung den gesetzlichen Vorschriften entspricht. Die Grundeinstellung des Scheinwerfers wird bei der Fertigung des Kraftfahrzeuges mit einem Kamerasystem vorgenommen, das über zugeordnete Schrauber die erforderlichen Einstellungen an dem mechanischen Einstellsystem durchführt. Hierzu muss ein Werker eine Motorhaube des Kraftfahrzeuges öffnen und die Schrauber mit dem Einstellsystem koppeln. In einer Werkstatt wird mittels eines so genannten Lichtkastens die Einstellung des Scheinwerfers visuell von dem Werker überprüft und eine manuelle Verstellung des mechanischen Einstellsystems zur Justierung des Scheinwerfers in der Grundeinstellung von dem Werker vorgenommen.

Es ist Aufgabe der Erfindung, einen Scheinwerfer der eingangs genannten Art zu schaffen, an dem ein Einstellwert einfach zu ermitteln und dauerhaft zu erhalten ist.

Erfindungsgemäß wird die Aufgabe dadurch gelöst, dass die beiden Steller zum Justieren des Lichtmoduls in einer Grundeinstellung mit einem einen nicht flüchtigen Speicher umfassenden Steuergerät zur Speicherung eines die Grundeinstellung des Lichtmoduls definierenden Einstellwertes verbunden sind,wobei das Steuergerät über eine Schnittstelle mit einer externen Eingabevorrichtung für den aus einer Abweichung zur Soll-Lage resultierenden Einstellwert zum Einschreiben dieses Einstellwertes in den Speicher gekoppelt ist.

Das Lichtmodul wird bei einer entsprechenden Ansteuerung der Steller durch das Steuergerät anhand des Einstellwertes in seine gesetzlich vorgeschriebene Grundeinstellung gebracht, weshalb eine mechanische Einstelleinrichtung nicht benötigt wird und der Scheinwerfer sonach einen relativ kompakten Aufbau aufweist. Durch die selbsttätige Einstellung des Lichtmoduls entfällt ein zeitintensives Justieren mittels Einstellschrauben. Das Lichtmodul kann als Projektionsmodul oder schalenförmiger Reflektor ausgebildet sein. Zur leicht handhabbaren Eingabe von Einstellwerten ist das Steuergerät über die Schnittstelle mit der externen Eingabevorrichtung zum Einschreiben des Einstellwertes in den Speicher gekoppelt. Die Schnittstelle kann beispielsweise als eine drahtlose Schnittstelle ausgebildet sein.

Um den Einstellwert an veränderte Gegebenheiten des Kraftfahrzeuges oder des Scheinwerfers anzupassen, ist zweckmäßigerweise der Einstellwert überschreibbar gespeichert. Verändert sich beispielsweise die Lage des Lichtmoduls aufgrund einer längeren Benutzung des Kraftfahrzeuges durch Vibration oder andere Einflüsse, ist es möglich, einen neuen Einstellwert zu ermitteln und den bereits gespeicherten Einstellwert mit dem neuen Einstellwert zu überschreiben, worauf die Steller unter Grundlage des neuen Einstellwertes das Lichtmodul in die neue Grundeinstellung bringen.

Nach einer vorteilhaften Ausgestaltung der Erfindung umfasst die externe Eingabevorrichtung ein Kamerasystem zur Erfassung der Ist-Lage des Lichtmoduls, das eine Abweichung zur Soll-Lage ermittelt und den aus der Abweichung resultierenden Einstellwert in den Speicher einschreibt. Bei der Fertigung des Kraftfahrzeuges ermittelt das Kamerasystem automatisch die gegebene Ist-Lage, die in der Regel aufgrund von Bauteil- und Montagetoleranzen von der Soll-Lage abweicht, und bestimmt den Einstellwert für die Grundeinstellung des Lichtmoduls. Das Kamerasystem schreibt den Einstellwert in den nicht flüchtigen Speicher des Steuergerätes worauf über die Steller das Lichtmodul in seine Grundeinstellung verschwenkt wird.

In einer alternativen Weiterbildung des Erfindungsgedankens umfasst die externe Eingabevorrichtung ein Diagnose-Testgerät, über dessen Bedienelemente eine manuelle, visuell kontrollierte Einstellung erfolgt, wobei das Diagnose-Testgerät den aus der Einstellung resultierenden Einstellwert in den Speicher einschreibt. Diese Ausgestaltung bietet sich beispielsweise für den Einsatz in einer Werkstatt an. Der Werker nimmt die Einstellung des Lichtmoduls manuell mittels der als Cursor-Steuerung ausgebildeten Bedienelemente vor.

Vorzugsweise sind die Steller als linear verstellbare Aktuatoren ausgebildet, die einen Verstellweg aufweisen, der sich aus einem Einstellweg für die Grundeinstellung und einem Verstellweg für die Leuchtweitenregulierung oder die Kurvenlichtregulierung zusammensetzt. Damit ist der Verstellweg der Steller nicht durch den zur Einstellung der Grundstellung benötigten Einstellweg begrenzt, vielmehr steht zusätzlich noch der Verstellweg für die Leuchtweitenregulierung oder die Kurvenlichtregulierung zur Verfügung.

Zweckmäßigerweise ist das Steuergerät Bestandteil einer automatischen Scheinwerfer-Regeleinrichtung. Eine solche Regeleinrichtung wird beispielsweise beim so genannten adaptive forward lighting (AFL) eingesetzt.

Um zusätzliche Verbindungen für die Signalgebung zu vermeiden, ist das Steuergerät über ein Bus-System mit den Stellern oder mit einem zwischengeschalteten Stellmotor-Leistungsmodul sowie mit der Schnittstelle verbunden. Das Bus-System, beispielsweise ein Can-Bus, ist für weitere Anwendungen ohnehin Bestandteil eines modernen Kraftfahrzeuges.

Zur Bereitstellung der für das Verschwenken des Lichtmoduls erforderlichen Freiheitsgrade ist jeder der Steller einerseits über ein Gelenk an dem Lichtmodul und andererseits über ein Gelenk an demselben Aufnahmeteil befestigt. Durch die Befestigung der beiden Steller für das Lichtmodul an dem Aufnahmeteil des Scheinwerfers entfällt ein zusätzlicher Tragrahmen für den Schwenkantrieb des Lichtmoduls.

Bevorzugt verlaufen die horizontale Achse und die vertikale Achse durch eine zwischen dem Lichtmodul und dem Aufnahmeteil angeordnete Lagerstelle und die vertikale Achse ist zwischen den beiden Stellern ausgerichtet. Vorzugsweise liegen die Gelenke auf einer Linie, die quer zur vertikalen Achse und beabstandet zur Lagerstelle verläuft.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der vorliegenden Erfindung ist nur durch die Ansprüche definiert.

Die Erfindung wird im Folgenden anhand eines Ausführungsbeispieles unter Bezugnahme auf die zugehörigen Zeichnungen näher erläutert. Es zeigen:

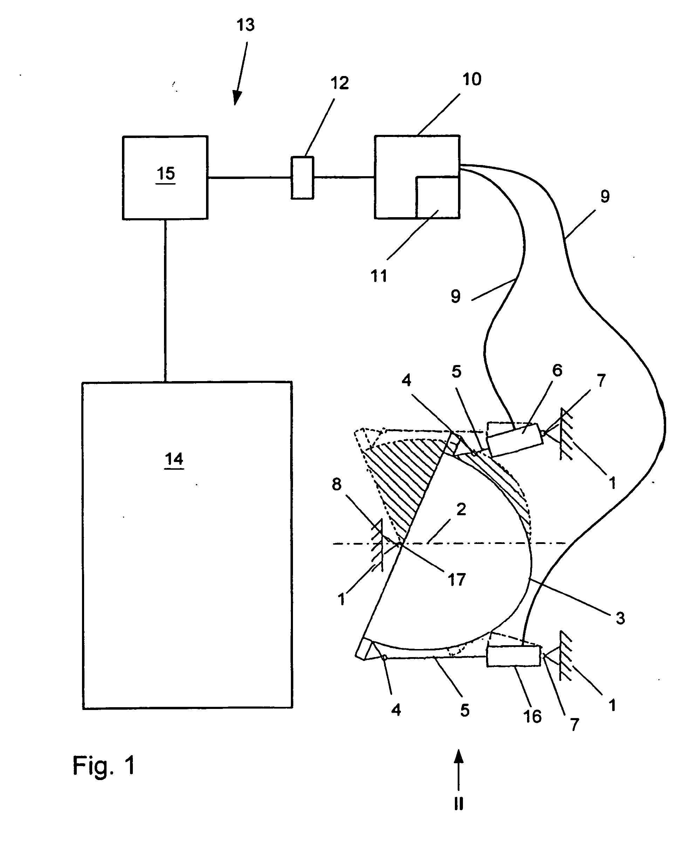

- Fig. 1: eine schematische Draufsicht auf einen erfindungsgemäßen Scheinwerfer und

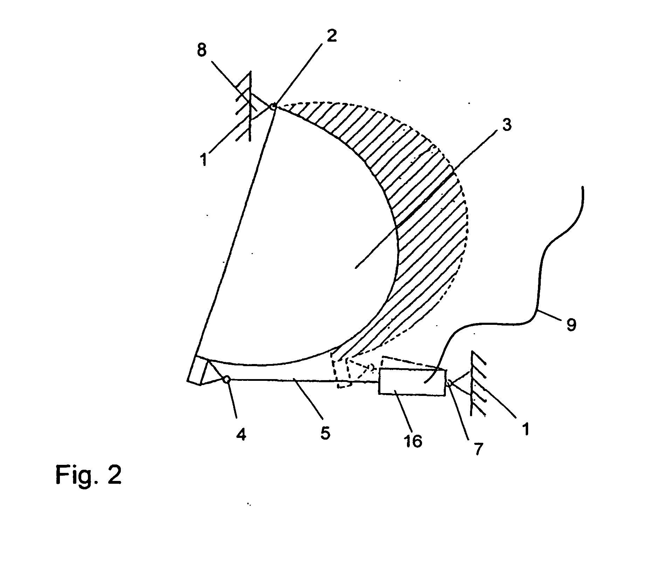

- Fig. 2: eine schematische Teildarstellung des Scheinwerfers nach Fig. 1 in Richtung des Pfeils II.

Der Scheinwerfer umfasst ein an einem Aufnahmeteil 1 um eine horizontale Achse 2 und eine vertikale Achse 17 schwenkbar gelagertes Lichtmodul 3, wobei das schematisch dargestellte Aufnahmeteil 1 als ein topfförmiges Scheinwerfergehäuse ausgebildet sein kann, dessen vordere Öffnung durch eine lichtdurchlässige Abschlussscheibe überdeckt ist. Das Lichtmodul 3 steht über Gelenke 4 mit Stellern 6, 16 in Verbindung, wobei zwischen jedem der Steller 6, 16 und einer jeweils benachbarten Anbindungsstelle des Aufnahmeteils 1 ein Gelenk 7 angeordnet ist. Als Steller 6, 16 dienen Linearaktuatoren, die im unteren Bereich des Scheinwerfers in einer horizontal verlaufenden Ebene liegen. Die Steller 6, 16 umfassen linear bewegbare bolzenartige Stellelemente 5, die mit den dem vorderen Bereich des Lichtmoduls 3 zugeordneten Gelenken 4 verbunden sind.

Mittig zwischen den beiden Gelenken 4 hindurch verläuft die vertikale Achse 17 zwischen dem vorderen Randbereich des Lichtmoduls 3 und einer Lagerstelle 8. Bei einer synchronen Bewegung der Stellelemente 5 in der einen Richtung schwenkt das Lichtmodul 3 um die durch die Lagerstelle 8 verlaufende horizontale Achse 2 und bei einem synchronen Bewegen der Stellelemente 5 in der anderen Richtung verschwenkt das Lichtmodul 3 um die durch die Lagerstelle 8 verlaufende vertikale Achse 17.

Die Steller 6, 16 stehen über ein Bus-System 9 mit einem Steuergerät 10 in Verbindung, das einen nicht flüchtigen Speicher 11 zum überschreibbaren Einspeichern eines eine Grundeinstellung des Lichtmoduls 3 definierenden Einstellwertes umfasst. Um den Einstellwert in den Speicher einzuschreiben, ist das Steuergerät 10 über eine Schnittstelle 12 mit einer externen Eingabevorrichtung 13 gekoppelt, der ein Kamerasystem 14 mit einem Rechner 15 zugeordnet ist. Das Kamerasystem 14 dient zur Erfassung der Ist-Lage des Lichtmoduls 3 und ermittelt eine Abweichung zur Soll-Lage, die durch die gesetzlich geregelte Grundeinstellung definiert ist. Den aus der Abweichung zwischen der Ist-Lage und der Soll-Lage des Lichtmoduls 3 resultierenden Einstellwert schreibt das Kamerasystem 14 mit dem Rechner 15 in den Speicher 11 des Steuergerätes 10 ein. Daraufhin wird über die Steller 6, 16 ein Verschwenken des Lichtmoduls 3 bewirkt, wonach sich dasselbe in der Grundeinstellung befindet. Nach der Ermittlung eines neuen Einstellwertes wird der gespeicherte Einstellwert überschrieben und das Lichtmodul 3 gemäß dem neuen Einstellwert in seiner Grundeinstellung justiert.

### Bezugszeichenliste

- 1.: Aufnahmeteil
- 2.: horizontale Achse
- 3.: Lichtmodul
- 4.: Gelenk
- 5.: Stellelement
- 6.: Steller
- 7.: Gelenk
- 8.: Lagerstelle
- 9.: Bus-System
- 10.: Steuergerät
- 11.: Speicher
- 12.: Schnittstelle
- 13.: Eingabevorrichtung
- 14.: Kamerasystem
- 15.: Rechner
- 16.: Steller
- 17.: vertikale Achse

## Patentansprüche

1. Scheinwerfer für ein Kraftfahrzeug mit einem an einem Aufnahmeteil (1) gehalterten und um eine vertikale Achse (17) sowie eine horizontale Achse (2) verschwenkbaren Lichtmodul (3) und mit zwei fernbetätigten Stellern (6, 16) zur vertikalen Leuchtweitenregulierung sowie zur horizontalen Kurvenlichtregulierung, **dadurch gekennzeichnet, dass** die beiden Steller (6, 16) zum Justieren des Lichtmoduls (3) in einer Grundeinstellung mit einem einen nicht flüchtigen Speicher (11) umfassenden Steuergerät (10) zur Speicherung eines die Grundeinstellung des Lichtmoduls (3) definierenden Einstellwertes verbunden sind,wobei das Steuergerät (10) über eine Schnittstelle (12) mit einer externen Eingabevorrichtung (13) für den aus einer Abweichung zur Soll-Lage resultierenden Einstellwert zum Einschreiben dieses Einstellwertes in den Speicher (11) gekoppelt ist.

2. Scheinwerfer nach Anspruch 1, **dadurch gekennzeichnet, dass** der Einstellwert überschreibbar gespeichert ist.

3. Scheinwerfer nach Anspruch 1, **dadurch gekennzeichnet, dass** die externe Eingabevorrichtung (13) ein Kamerasystem (14) zur Erfassung der Ist-Lage des Lichtmoduls (3) umfasst, das eine Abweichung zur Soll-Lage ermittelt und den aus der Abweichung resultierenden Einstellwert in den Speicher (11) einschreibt.

4. Scheinwerfer nach Anspruch 1, **dadurch gekennzeichnet, dass** die externe Eingabevorrichtung (13) ein Diagnose-Testgerät umfasst, über dessen Bedienelemente eine manuelle, visuell kontrollierte Einstellung erfolgt, wobei das Diagnose-Testgerät den aus der Einstellung resultierenden Einstellwert in den Speicher (11) einschreibt.

5. Scheinwerfer nach Anspruch 1, **dadurch gekennzeichnet, dass** die Steller (6, 16) als linear verstellbare Aktuatoren ausgebildet sind, die einen Verstellweg aufweisen, der sich aus einem Einstellweg für die Grundeinstellung und einem Verstellweg für die Leuchtweitenregulierung oder die Kurvenlichtregulierung zusammensetzt.

6. Scheinwerfer nach einem der Ansprüche 1 bis 5, **dadurch gekennzeichnet, dass** das Steuergerät (10) Bestandteil einer automatischen Scheinwerfer-Regeleinrichtung ist.

7. Scheinwerfer nach Anspruch 1, **dadurch gekennzeichnet, dass** das Steuergerät (10) über ein Bus-System (9) mit den Stellern (6, 16) und der Schnittstelle (12) verbunden ist.

8. Scheinwerfer nach einem der Ansprüche 1 bis 7, **dadurch gekennzeichnet, dass** jeder der Steller (6, 16) einerseits über ein Gelenk (4) an dem Lichtmodul (3) und andererseits über ein Gelenk (7) an demselben Aufnahmeteil (1) befestigt ist.

9. Scheinwerfer nach Anspruch 8, **dadurch gekennzeichnet, dass** die horizontale Achse (2) und die vertikale Achse (17) durch eine zwischen dem Lichtmodul (3) und dem Aufnahmeteil (1) angeordnete Lagerstelle (8) verlaufen und die vertikale Achse (17) zwischen den beiden Stellern (6, 16) ausgerichtet ist.

10. Scheinwerfer nach Anspruch 8, **dadurch gekennzeichnet, dass** die Gelenke (4) auf einer Linie liegen, die quer zur vertikalen Achse (17) und beabstandet zur Lagerstelle (8) verläuft.

## Claims

1. Headlamp for a motor vehicle having a light module (3), which is mounted on a receiving part (1) and pivotable about a vertical axis (17) as well as a horizontal axis (2), and having two remotely actuated actuators (6, 16) for vertical headlamp beam adjustment as well as for horizontal cornering light adjustment, **characterized in that** the two actuators (6, 16) for aligning the light module (3) in a basic setting are connected to a control unit (10) comprising a non-volatile memory (11) for storing a set value that defines the basic setting of the light module (3), wherein the control unit (10) is linked by an interface (12) to an external input device (13) for the set value that results from a deviation from the setpoint position in order to write said set value into the memory (11).

2. Headlamp according to claim 1, **characterized in that** the set value is stored in such a way that it may be overwritten.

3. Headlamp according to claim 1, **characterized in that** the external input device (13) comprises a camera system (14) for detecting the actual position of the light module (3), which camera system determines a deviation from the setpoint position and writes the set value resulting from the deviation into the memory (11).

4. Headlamp according to claim 1, **characterized in that** the external input device (13) comprises a diagnostic test apparatus having control elements, by means of which manual, visually controlled adjustment is effected, wherein the diagnostic test apparatus writes the set value resulting from the adjustment into the memory (11).

5. Headlamp according to claim 1, **characterized in that** the actuators (6, 16) take the form of linearly displaceable actuators, which have a displacement path composed of an adjustment path for the basic setting and a displacement path for the headlamp beam adjustment or the cornering light adjustment.

6. Headlamp according to one of claims 1 to 5, **characterized in that** the control unit (10) is a component part of an automatic headlamp control device.

7. Headlamp according to claim 1, **characterized in that** the control unit (10) is connected by a bus system (9) to the actuators (6, 16) and the interface (12).

8. Headlamp according to one of claims 1 to 7, **characterized in that** each of the actuators (6, 16) is fastened on the one hand by a joint (4) to the light module (3) and on the other hand by a joint (7) to the same receiving part (1).

9. Headlamp according to claim 8, **characterized in that** the horizontal axis (2) and the vertical axis (17) extend through a bearing point (8) disposed between the light module (3) and the receiving part (1), and the vertical axis (17) is directed between the two actuators (6, 16).

10. Headlamp according to claim 8, **characterized in that** the joints (4) lie on a line, which extends transversely of the vertical axis (17) and with spacing relative to the bearing point (8).

## Revendications

1. Phare pour un véhicule automobile, avec un module d'éclairage (3) maintenu sur une partie de réception (1) et susceptible de pivoter autour d'un axe vertical (17) ainsi que d'un axe horizontal (2), et avec deux régleurs (6, 16) télécommandés pour la régulation verticale de la portée d'éclairage, ainsi que pour la régulation horizontale d'éclairage en virage, **caractérisé en ce que** les deux régleurs (6, 16) sont reliés, pour l'ajustement du module d'éclairage (3), en une position de base, à un appareil de commande (10) comprenant une mémoire (11) non volatile, pour la mémorisation d'une valeur de réglage définissant le réglage de base du module d'éclairage (3), l'appareil de commande (10) étant couplé, par l'intermédiaire d'une interface (12), à un dispositif d'introduction (13) externe, pour la valeur de réglage résultant d'un écart par rapport à la position de consigne, dans le but d'enregistrer cette valeur de réglage dans la mémoire (11).

2. Phare selon la revendication 1, **caractérisé en ce que** la valeur de réglage est mémorisée avec possibilité de sur-écriture.

3. Phare selon la revendication 1, **caractérisé en ce que** le dispositif d'introduction externe (13) comprend un système à caméra (14) pour détecter la position réelle du module d'éclairage (3), qui détermine un écart par rapport à la position de consigne et qui enregistre dans la mémoire (11) la valeur de réglage résultant de l'écart.

4. Phare selon la revendication 1, **caractérisé en ce que** le dispositif d'introduction externe (13) comprend un appareil de test de diagnostic, par l'intermédiaire des éléments de manoeuvre duquel s'effectue un réglage manuel contrôlé visuellement, l'appareil de test de diagnostic enregistrant dans la mémoire (11) la valeur de réglage résultant du réglage.

5. Phare selon la revendication 1, **caractérisé en ce que** les régleurs (6, 16) sont réalisés sous la forme d'actionneurs réglables de façon linéaire, présentant une course de manoeuvre composée d'une course de réglage, pour le réglage de base, et d'une course d'ajustage, pour la régulation de portée d'éclairage ou la régulation d'éclairage en virage.

6. Phare selon l'une des revendications 1 à 5, **caractérisé en ce que** l'appareil de commande (10) fait partie d'un dispositif de régulation de phare automatique.

7. Phare selon la revendication 1, **caractérisé en ce que** l'appareil de commande (10) est relié, par l'intermédiaire d'un système de bus (9), aux régleurs (6, 16) et à l'interface (12).

8. Phare selon l'une des revendications 1 à 7, **caractérisé en ce que** chacun des régleurs (6, 16) est fixé, d'une part, par l'intermédiaire d'une articulation (4) sur le module d'éclairage (3) et, d'autre part, par l'intermédiaire d'une articulation (7) sur la même partie de réception (1).

9. Phare selon la revendication 8, **caractérisé en ce que** l'axe horizontal (2) et l'axe vertical (17) passent par un emplacement d'appui pivotant (8) disposé entre le module d'éclairage (3) et la partie de réception (1), et l'axe vertical (17) est orienté entre les deux régleurs (6, 16).

10. Phare selon la revendication 8, **caractérisé en ce que** les articulations (4) sont situées sur une ligne, s'étendant transversalement par rapport à l'axe vertical (17) et à distance de l'emplacement d'appui pivotant (8).
